# EUROPEAN PATENT APPLICATION

(11) **EP 4 811 785 A1**
(43) Date of publication of application: **23.09.2026**
(21) Application number: 25275019.5
(22) Date of filing: 20.03.2025
(51) Int. Cl.: H04N 19/17, H04N 19/44, H04N 19/59, H04N 19/147

(54) **WIRELESS DATA TRANSFER FROM AN UNCREWED VEHICLE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A system and computer-implemented method of transferring data from an uncrewed vehicle comprises obtaining (202), at the uncrewed vehicle, data to be transferred, and compressing (204) the obtained data using a lossy data compression technique to produce compressed data. The compressed data is transferred (206) over a wireless communications link to a remote device, which performs (208) resolution enhancement on the transferred compressed data using a trained machine learning model to produce enhanced data.

## Description

### FIELD OF THE INVENTION

The present invention relates to data transfer and in particular to wireless data transfer with low latency from an uncrewed vehicle.

### BACKGROUND

There are certain situations where conditions preclude reliable high bandwidths and low latency wireless information transmission from uncrewed vehicles. Examples include high density information such as video feeds, audio or inertial information being transmitted from the vehicle at an emergency/natural disaster area, a combat situation, during poor weather conditions, and so on.

It is important that the data is transmitted from the uncrewed vehicle to a remote station with as short a latency and maximum data richness as possible, e.g. to allow for real time in-depth control or oversight of the vehicle when a user at the remote station is controlling or monitoring it remotely based on the data.

### SUMMARY

Embodiments of the present invention can address one or more of the above technical problems. Embodiments can allow less bandwidth to be used whilst still providing necessary information at a low latency to users. Embodiments may utilise resolution enhancement capabilities to drastically reduce wireless transmission bandwidth requirements for uncrewed vehicle information. This can comprise high density but relatively imprecise information, including but not limited to visual, inertial or auditory information.

Embodiments may allow for real time information, such as images, to be sent from the uncrewed vehicle to a remote user using bandwidths not allowed by lossless error correcting compression and/or at a suitable latency. Embodiments can also naturally build obfuscation of the transmitted data to enhance the security of the transmitted data.

According to a first aspect of the present invention there is provided a computer-implemented method of transferring data from an uncrewed vehicle, the method comprising:
at the uncrewed vehicle:
   obtaining data to be transferred;
   compressing the obtained data using a lossy data compression technique to produce compressed data;
   transferring the compressed data from the uncrewed vehicle over a wireless communications link to a remote device, and
at the remote device:
   performing resolution enhancement on the transferred compressed data using a trained machine learning model to produce enhanced data.

The trained machine learning model (e.g. a trained deep learning model, such as a CNN) may be trained to receive the compressed data as input and to output the enhanced data comprising a version of the compressed data having increased resolution, e.g. with data points at a finer scale added around bits of the compressed data.

The lossy data compression technique may comprise a (non-AI) rules-based resolution reduction technique, such as MP3 or MP4.

In some embodiments the method may further comprise applying a lossless compression technique to the compressed data prior to the transferring from the uncrewed vehicle. The method may further comprise applying a lossless decompression technique to the transferred compressed data prior to the performing of the resolution enhancement.

When the obtained data comprises a video, some embodiments may further comprise steps of:
selecting a frame of the video as a reference frame, and compressing and transfer the reference frame to the remote device;
selecting a frame of the video as a current frame, and identify changes between the current frame and the reference frame;
compressing data representing the identified changes;
transferring the compressed data representing the identified changes over the wireless communication link to the remote device;
at the remote device, reconstructing the current frame using the transferred data representing the identified changes and the reference frame to produce a reconstructed frame, and
performing the resolution enhancement on the reconstructed frame using the trained machine learning model.

The uncrewed vehicle may be a land, air, underwater and/or water surface type of uncrewed vehicle. The machine learning model may be trained using training data generated using, or based on, a vehicle of a same type/domain as the uncrewed vehicle. The machine learning model may be trained using training data relating to a particular type of territory/domain (e.g. land, sky, underwater or water surface), where the particular type of the territory/domain corresponds to an intended use/target territory/domain of the uncrewed vehicle.

The trained machine learning model for the resolution enhancement may be trained (e.g. by adjusting weights of the model) using a reward function based on (e.g. pixelwise) similarity between (original/unprocessed) training data and enhanced data comprising the training data compressed using the lossy data compression technique and then resolution enhanced using the machine learning model for resolution enhancement. For example, close pixelwise similarity can result in a high reward value. When the training data comprises a video, embodiments may compress data representing identified changes between a reference frame and a current frame of the video; reconstruct the current frame using the compressed data representing the identified changes, and perform the resolution enhancement on the reconstructed frame to produce the enhanced data.

In some embodiments the lossy data compression technique may comprise a resolution reduction technique that uses a trained machine learning model (e.g. a deep learning model, such as a CNN) for data compression. The trained machine learning model for data compression may be trained using a reward function based on a data size of compressed training data and a data size of (original/unprocessed) training data, e.g. reduced said data size of the compressed training data compared to the data size of the (original/unprocessed) training data can result in a high reward value. The reward function may additionally use a reward value calculated by the reward function used for training the machine learning model for the resolution enhancement, e.g. a higher said reward value (based on the pixelwise similarity between the obtained data and the enhanced data) can also increase a reward value calculated by the reward function for training the machine learning model for data compression.

The method may further comprise identifying/classifying at least one region of interest in the obtained data. The at least one region of interest may be processed by the trained machine learning model for data compression differently to the obtained data outside the region of interest, e.g. by highlighting the at least one region of interest to the trained machine learning model for data compression such that it can process that region differently to the rest of the image. Alternatively, the at least one region of interest may not be compressed using the lossy compression technique or the at least one region of interest may be compressed using a different compression technique (e.g. non-lossy or lower loss) to the lossy data compression technique used for the obtained data outside the region of interest. The method may comprise transferring data relating to the region of interest over the wireless communications link.

The at least one region of interest may be identified/classified using a trained machine learning model. The trained machine learning model may be trained to identify/classify regions of interest in a context-specific manner. For example, the machine learning model may be trained to identify/classify regions of interest using training data generated using, or based on, a vehicle of a same type as the uncrewed vehicle. The machine learning model may be trained to identify/classify regions of interest using training data relating to a particular type of territory/domain (e.g. land, sky, underwater or water surface), where the particular type of the territory/domain corresponds to an intended use/target territory/domain of the uncrewed vehicle.

The trained machine learning model for identifying/classifying the region of interest may be trained (e.g. by adjusting weights of the model) using a reward function based on accuracy of identifying a region of interest and/or accuracy of classification of the region of interest, e.g. accurate identification/classification of the region of interest can result in a high reward value. The machine learning model for data compression may be trained based on at least one region of interest identified in training data by the trained machine learning model for identifying/classifying the region of interest, and at least one region of interest identified in enhanced training data comprising the training data compressed using the lossy data compression technique and then resolution enhanced using the machine learning model for resolution enhancement.

The reward function for identifying/classifying the region of interest can calculate a reward value by comparing the identified region of interest, a classification label of the region of interest, and a confidence score in the region of interest of each of (original/unprocessed) training data and enhanced data comprising the training data compressed using the lossy data compression technique and then resolution enhanced using the machine learning model for resolution enhancement. In some embodiments Gaussian Noise may be added to the compressed training data before performing the resolution enhancement using the machine learning model for resolution enhancement.

The compressing the obtained data and/or the performing the resolution enhancement may be executed using an analogue processor/computer or a GPU. The compressing the obtained data may be performed using a dedicated processor/computer/chip, e.g. one located in proximity to a source (such as a camera or microphone) of the obtained data.

The obtained data may represent information that is to be interpreted by a human user. The obtained data may comprise an image, video, LIDAR, RADAR, audio, vehicle position-related data (e.g. data of an Inertial Measurement Unit or an Inertial Navigation System), etc.

The wireless communications link may comprise, for example, Ultra High Radio Frequency, Very High Radio Frequency, Radio Frequency, a cellular network such as 4G upwards, WiFi^{™}, or a Bluetooth^{™} link.

The enhanced data may be processed further, e.g. displayed to a user of the remote device, stored and/or transferred to another device. The enhanced data may be used to generate a control signal for guiding or manoeuvring a vehicle, including the uncrewed vehicle.

According to another aspect of the present invention there is provided a system comprising an uncrewed vehicle and a remote device,
the uncrewed vehicle comprising a data source, at least one processor and a wireless communication link, wherein the at least one processor is configured to:
   obtain data to be transferred from the data source;
   compress the obtained data using a lossy data compression technique to produce compressed data, and
   transfer the compressed data over the wireless communications link to the remote device,
the remote device comprising at least one processor and a wireless communication link, wherein the at least one processor is configured to:
   received the transferred compressed data via the wireless communication link, and
   perform resolution enhancement on the transferred compressed data using a trained machine learning model to produce enhanced data.

According to another aspect of the present invention there is provided an uncrewed vehicle comprising a data source, at least one processor and a wireless communication link, wherein the at least one processor is configured to:
obtain data to be transferred from the data source;
compress the obtained data using a lossy data compression technique to produce compressed data, and
transfer the compressed data over the wireless communications link to a remote device,

A method of operating an uncrewed vehicle substantially as described herein is also provided.

According to another aspect of the present invention there is provided a computing device comprising at least one processor and a wireless communication link, wherein the at least one processor is configured to:
receive, via the wireless communication link, compressed data from an uncrewed vehicle, and
perform resolution enhancement on the transferred compressed using a trained machine learning model to produce enhanced data.

A method of operating a remote/computing device substantially as described herein is also provided.

According to other aspects of the invention there are provided computer-implemented methods of training an AI model for resolution enhancement, training an AI model for resolution reduction/data compression, and training an AI model for identifying/classifying a region of interest in data.

The AI model may be obtained by training. Training can mean that a predefined operation rule or artificial intelligence model is configured to perform a desired feature (or purpose) by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values. Each layer may perform a layer operation through calculation of a previous layer and an operation of a plurality of weights.

Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks. Examples of activation functions that can be used for NNs, including CNNs, include ReLU, Sigmoid and Tanh. and Examples of learning algorithms include, but are not limited to, supervised learning, unsupervised learning, semi-supervised learning, or reinforcement learning.

The method of training any of the AI models may comprise:
obtaining a training dataset comprising a plurality of data obtained using, or based on, for example, a vehicle being used, e.g. in a particular situation. Each data may comprise a ground truth label.

The method may comprise:
training the AI model for resolution enhancement using each data of the training dataset by:
resolution enhancing the data using a set of parameters/weights;
comparing the resolution-enhanced data and the training data, and
updating the parameters/weights of the model based on the comparison, e.g. using a reward function.

The method may comprise:
training the AI model for region of interest identification/classification using each data of the training dataset by:
identifying/classifying a region of interest in the data using a set of parameters/weights;
determining an accuracy of the region of interest identification/classification based on the training data, and
updating the parameters/weights of the model based on the determining, e.g. using a reward function.

The method may comprise:
training the AI model for data compression using each data of the training dataset by:
compressing the data using a set of parameters/weights;
comparing a data size of the compressed data and the training data, and
updating the parameters/weights of the model based on the comparison, e.g. using a reward function.

The reward function used to update the parameters/weights of the model for data compression may also use a reward value calculated by the reward function used for training the AI-based model for resolution enhancement and/or a reward value calculated by the reward function used for training the AI-based model for region of interest identification/classification.

Embodiments may calculate a loss based on a difference between a predicted label generated by a said model and a ground truth label of the training data. The parameters of the model may be updated based on the calculated loss. In alternative embodiments the AI model for data compression and/or the AI model resolution enhancement may be trained using unsupervised learning after the ML model for Rol identification/classification has been trained using supervised learning.

According to another aspect of the invention there is provided a computing device configured substantially as described herein mounted in or on an uncrewed vehicle.

According to a further aspect of the present invention there is provided a computer readable medium, or circuit, storing computer programs to operate any method substantially as described herein.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 is a block diagram of a first example system comprising an uncrewed vehicle and a remote device;
Figure 2 is a diagram showing examples of steps performed by the system;
Figure 3 schematically illustrates training of an AI-based resolution enhancement model of the system;
Figure 4 schematically illustrates training of an AI-based resolution reduction model and the AI-based resolution enhancement model;
Figure 5 is a block diagram of another example system that uses an AI-based region of interest algorithm, and
Figure 6 schematically illustrates training of the AI-based resolution reduction model in combination with the region of interest algorithm.

### DETAILED DESCRIPTION

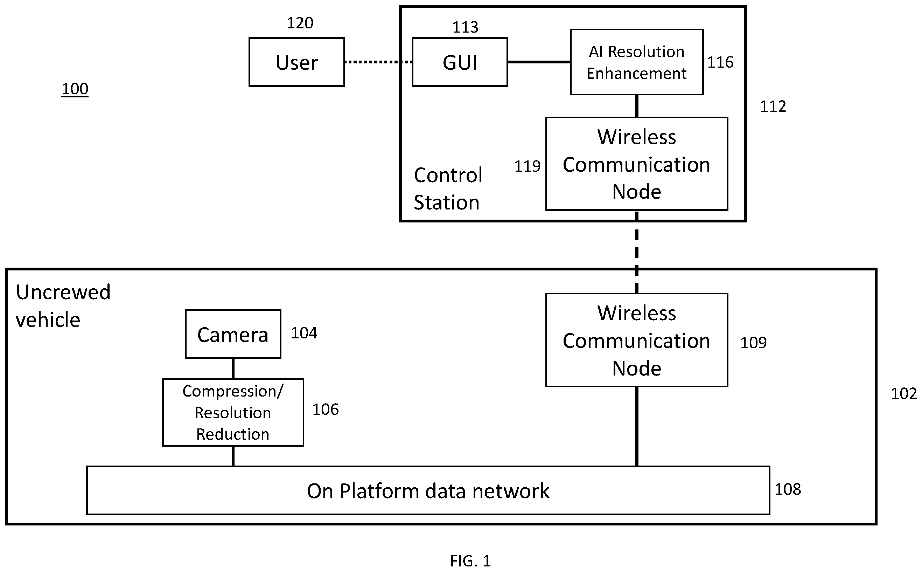

Figure 1 is a simplified block diagram of an example system 100 comprising an uncrewed vehicle 102 and a remote device 112. Although one vehicle and remote device are illustrated in the example it will be understood that more than one vehicle and/or remote device may be present in alternative embodiments.

The uncrewed vehicle 102 can comprise any suitable type of uncrewed vehicle, including a land, air, underwater or aquatic surface-based vehicle. The vehicle may be autonomous and/or may be remotely controlled by another device and/or a human user. The vehicle will further include conventional components, e.g. power supply, propulsion/traction means, etc, which will be well-known to the skilled person and so are not described in detail herein.

The uncrewed vehicle 102 can include at least one data source, which will typically comprise a sensor, or a device such as a computer/processor that is in communication with a sensor. In the example one sensor in the form of a video camera 104 is shown; however, it will be understood that other embodiments can include alternative or additional data source(s)/sensor(s), such as a still image camera, a microphone, a RADAR transceiver, a LIDAR transceiver, an Inertial Measurement Unit, an Inertial Navigation System, etc.

The uncrewed vehicle 102 further comprises at least one processor 106. For efficiency, the processor may be dedicated to processing data obtained from one or more of the data source(s) 104. Such a dedicated processor may be located in close physical proximity to the data source(s), e.g. less than a metre away, but preferably co-located. The components can be connected by a highspeed dedicated connection with a sufficient minimum bandwidth to accommodate the full data output of the sensor (e.g. 10-20MB/s for a camera). One processor may obtain and process data from more than one data source, or each data source may have its own dedicated processor. The processor(s) may comprise an AI chip that can store AI parameters directly in the processor, a Graphics Processing Unit, an analogue computing processor or any other suitable type of processor. The analogue computing processor may comprise, for example, a Mythic MM1076 chip.

One or more further processor/computer (not shown) may be in communication with the processor(s) 106. For example, the vehicle may comprise at least one Central Processing Unit, microprocessor, microcontroller or an integrated circuit, for controlling components of the vehicle 102 and which may be associated with conventional components of computing devices, such as a memory, interface, etc. The memory may comprise volatile memory, such as random access memory (RAM), for use as temporary memory, and/or nonvolatile memory, such as Flash, read only memory (ROM), or electrically erasable programmable ROM (EEPROM), for storing data, programs, or instructions, for example. Other components and features of computers, such as a housing, power source/supply, etc, will be well-known to the skilled person and need not be described herein in detail.

The uncrewed vehicle 102 may further comprise an on-platform data network 108 that can transfer data to/from the processor 106 and other components. The network will typically comprise a Data Distribution Service, although alternatives such as a switched ethernet network or a CANBUS can be used. The network may be connected to a wireless communication node 109. The node may operate over any suitable wireless communication method, such as Ultra High Radio Frequency, Very High Radio Frequency, Radio Frequency, a cellular network such as 4G upwards, WiFi^{™}, Bluetooth^{™}, etc. The uncrewed platform 102 may use the node to transmit/receive other information. For example, precise low density information, such as GPS coordinates, can still be sent from the uncrewed vehicle in a conventional manner separately from the compressed data described herein.

The remote device 112 may be a computing device located in or on a fixed installation, such as a building or other static structure, including a control station, or it may be located in or on a mobile entity, including a vehicle, such as a ship or overland transporter, etc, or a handheld/portable device, such as a drone controller.

The remote device 112 may include a wireless communication node 119 that is capable of data communication with at least the wireless communication node 109 of the uncrewed vehicle 102. The remote device further includes at least one processor 116 that can exchange data with the communication node 119. The processor(s) 116 may comprise an AI chip that can store Al parameters directly in the processor, a Graphics Processing Unit, an analogue computing processor or some other type of processor. The analogue computing processor may comprise, for example, a Mythic MM1076 chip. One or more other processor/computer (not shown) of the remote device may be in communication with the processor(s) 116.

The remote device 112 can further comprise a user interface 113, which may comprise a display or touchscreen providing a graphical user interface, or it may comprise a speaker/microphone or any other means for allowing the user 120 to interact with the device. The remote device, or a body in or on which it is mounted, may include other components, such as a housing, power source/supply, etc, that will be well-known to the skilled person and need not be described herein in detail. It may also include components designed for a specific purpose, e.g. means, such as a joystick, for sending control signals to the uncrewed vehicle 102.

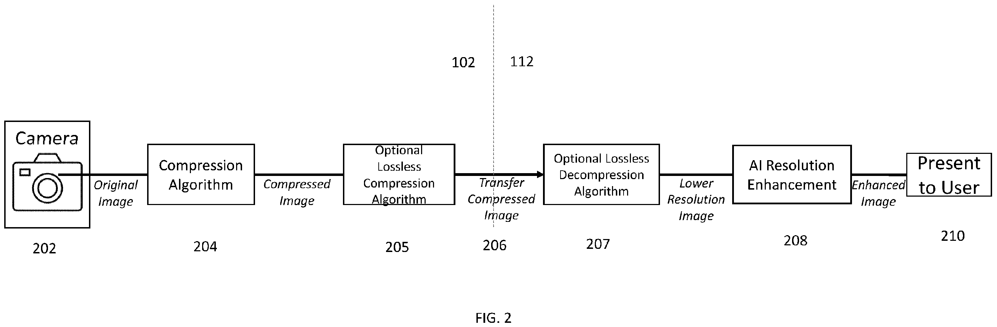

Figure 2 is a diagram showing example steps that can be performed by the uncrewed vehicle 102 and the remote device 112 in use. At step 202 the processor 106 of the uncrewed vehicle obtains data to be transferred to the remote device from the data source(s) 104. In some cases the data source may process raw data produced by a sensor, e.g. a camera, that is communication with it, and it will be understood that embodiments can operate using any suitable data types/formats. The data may represent information that is to be interpreted by a human user. The data may comprise, for example, one or more of an image, video, LIDAR, RADAR, audio, vehicle position-related data, e.g. telemetry or data from an Inertial Measurement Unit or an Inertial Navigation System, etc.

At step 204 the processor 106 of the uncrewed vehicle 104 compresses the obtained data using at least one data compression technique. In some embodiments it may use a lossy (non-lossless/loss-based) data compression technique. The lossy data compression technique can comprise any suitable technique that permanently removes information from the data in order to reduce data size. It may comprise a classical (non-AI) compression technique. For example, for image/video data JPEG, MP4 or a compression technique that uses frame interpolation may be used; for audio data MP3 may be used; for non-video/audio data, such as inertial data, Discrete Cosine Transformation (DCT) or the like may be used, etc. The compression technique may be set beyond its lossless limit.

In some embodiments the lossy compression technique may be AI-based and can use a trained machine learning model. Some embodiments may use a Convolutional Neural Network (CNN) that has been trained to reduce the resolution of the obtained data. The AI-based compression engine may comprise a deep learning model which deconstructs and removes information based on its weightings or algorithms. The trained machine learning model may be trained to input the obtained data and to output the compressed data, which can comprise a version of the obtained data having reduced resolution/information.

In some embodiments the processor 106 of the uncrewed vehicle 104 may first apply the AI-based compression technique of step 204 to the obtained data to produce compressed data and then at optional step 205 step apply another (typically a non-AI lossless) compression technique to that compressed data in order to produce further compressed data, which may be considered substantially maximally compressed.

At step 206 the uncrewed vehicle 102 transfers the (further) compressed data via the wireless communication nodes 109, 119 to the remote device 112. Additional processing, e.g. encryption, can be performed on the data prior to transmission, although this may not be desirable in many cases as it can increase latency.

The processor 116 of the remote device 112 receives the transferred data via the wireless communication node 119. Optionally at step 207 it may apply at least one decompression technique to the transferred data. The decompression technique(s) will normally be related to the compression technique(s) used at the optional step 205 by the uncrewed vehicle 102. For example, if a lossless classical compression algorithm, such as PNG compression, was used at step 205 then PNG decompression may be used at step 207.

At step 208 the processor 116 of the remote device 112 applies an upscaling/super resolution/resolution enhancement technique to the transferred data (or the decompressed data produced at step 207, if performed) using a trained machine learning model in order to produce enhanced data. For example, a trained deep learning AI model can be used reconstruct information from the transferred data based on weightings of the model. Examples of known AI-based deep learning techniques that can be used include Real-ESRGAN (https://github.com/xinntao/Real-ESRGAN), Upscayl (https://upscayl.org/) and Topaz Gigapixel AI (https://www.topazlabs.com/gigapixel). Other embodiments may use a deep learning model akin to Nvidia's Deep Learning Super Sampling^{™} (DLSS) or AMD's FidelityFX Super Resolution^{™} to increase the resolution of the information present in the transferred data based on learned experience.

The trained machine learning model may be trained to input the transferred/compressed data and to output the enhanced data, which can comprise a version of the transferred/compressed data having increased resolution. The enhanced data can include information substantially identical or similar to information in the obtained data that was removed by the lossy compression technique(s).

In the case of high density imprecise information, such as images, sound or inertial feedback, obtained from the data source(s) 104 embodiments can produce enhanced data that is sufficient to present "good enough" information to the user without the high bandwidth or latency requirements of traditional data transfer systems. It should be understood that the enhanced data will usually not fully include all the information present in the data originally obtained at step 202 prior to compression; rather, the enhanced data comprises the compressed data having been improved/augmented/enhanced to convey more information to the user 120 than the transferred/compressed data. Resolution enhancement for all data types can mean adding extra data points, at a finer scale, around the bits of the transferred/compressed data. The enhanced data can effectively enhance the information presented to the user make it more easily humanly interpreted compared to the transferred/compressed data. The enhanced data can include at least some information substantially identical or similar to information that was removed by the compression. The present inventors have appreciated that data obtained from data sources onboard an uncrewed vehicle is especially suitable for being compressed then reconstructed/enhanced in this way.

In embodiments the process of compression/information resolution reduction and/or resolution enhancement can be handled by either digital or analogue compute. Analogue compute can have advantages due to its speed and low power requirements, whilst the density , type, and intended use of the obtained information has an error resilience that lends itself to the lack of repeatability prevalent in analogue compute.

At step 210 the enhanced data can be presented to the user 120 via the interface 113 of the remote device 112 and/or in some other manner. Alternatively or additionally, the enhanced data may be further processed, e.g. stored and/or transferred to another device. In some cases the enhanced data may be used to guide or manoeuvre a vehicle, including the uncrewed vehicle 102. For example, it can be used to automatically and/or with user input generate control signals that are transferred back to the vehicle 102 for actioning.

Thus, embodiments effectively allow the uncrewed vehicle 102 to communicate with the remote device 112 using assumed knowledge in a way that is analogous to two experts in a field talking through a concept they both study; to a non-expert the data may not be understandable, but for the two experts a great amount of information can be transferred rapidly. This means that embodiments can also naturally build obfuscation of transmitted data as it contains a lower amount of information than the data originally obtained at step 202.

To further reduce the size of data that is transferred/processed, some embodiments may additionally use information related to inter-frame similarity when the obtained data comprises video data. For example, instead of compressing then processing all frames of a video in their entirety at step 204 onwards as described above in some embodiments the processor 106 of the uncrewed vehicle 102 may be configured to select a frame of the obtained video, e.g. a first frame in the video or frames at specific intervals, e.g. every 5^{th} frame, as a reference frame, and compress and transfer the reference frame to the remote device 112 for use in reconstructing frames. The processor may then select a frame, e.g. a consecutive frame, of the video as a current frame, and identify changes between the current frame and the reference frame, e.g. by comparing pixel values. Optionally, the processor may determine whether the level/amount of the identified changes is greater than a threshold, e.g. if only a few pixel values, such as under 50, have changed then it may be considered not worthwhile performing this additional compression and the full frame data may be compressed at step 204 and the process may continue as described above. When information regarding the changes is to be used, the processor compresses data representing the identified changes (e.g. values and locations of changed pixels) using any suitable compression technique, e.g. the lossy compression technique used at step 204. The processor then transfers the compressed data representing the identified changes over the wireless link 109 as in step 206. At the remote device 112 the processor 106 can reconstruct the current frame based on the transferred data representing the identified changes and the reference frame to produce a reconstructed frame, and can then input the reconstructed frame to the ML model for resolution enhancement as in step 208.

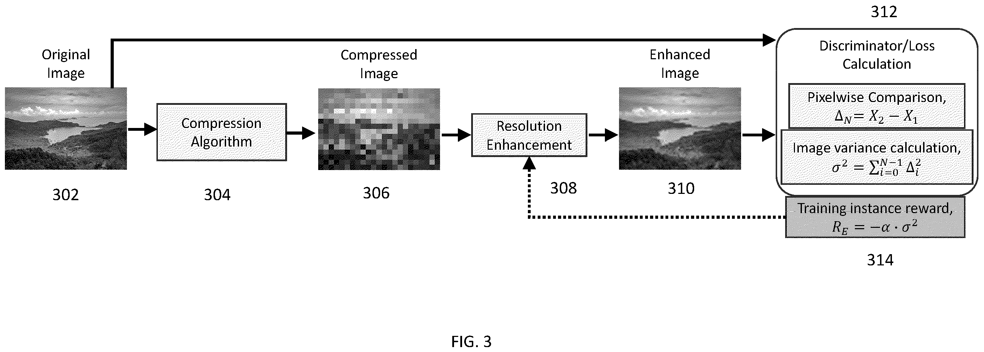

Figure 3 schematically illustrates an example of training the machine learning model (e.g. a deep learning model such as a CNN) used for the resolution enhancement. The method can allow for traditional onboard information compression. A large series of training data can be obtained, e.g. by using (or simulating/generating) a particular type of vehicle over a period of time in a particular type of terrain, geographical area, conditions/scenarios, etc, depending on the intended use scenario(s) of the uncrewed vehicle. In some cases, the training data may not necessarily originate from a vehicle, but can comprise data representing a type of scenario expected to be encountered by the relevant type of uncrewed vehicle during its use. Thus, the training data can be obtained from any source as long is it is in the correct domain. For example, training data for a ML model for use with an Uncrewed Ground Vehicle can be obtained using image data obtained from a camera or inertial sensors mounted on a standard car, or any other data source that can produce suitable images, i.e. images from a perspective of a camera onboard a vehicle. Training data for a ML model using inertial data can be obtained from simulating use of an uncrewed vehicle in particular situations. For audio data, several hours of audio recorded in a particular type of location, e.g. city or countryside, may be used as training data. In general, the larger the size of the training dataset (as long as it is sufficiently varied to avoid overtraining), the better the resulting ML model. For example, 10,000s to 1,000,000s of images may be used.

For the purposes of illustration, operations involving training data in the form of images will be described, but it will be understood that any type of data that can be provided by a data source 104 of the uncrewed vehicle (e.g. audio, inertial, etc) can be generated/obtained and used in other cases. The vehicle used for producing the training data may be the same as the uncrewed vehicle 102 that is to use the machine learning model after it has been trained based the training data, or it may merely be of the same general type, e.g. a particular air-based vehicle can be used to produce training data for a model that will be used by a range of air-based uncrewed vehicles; the same applies for underwater, water surface, overland, etc, uncrewed vehicles. The training may be performed using any suitable computer and data representing the trained machine learning model can be stored and/or transferred to another device in any suitable manner, e.g. via a communication link or using a physical storage device such as a USB memory device. Data comprising at least part of one or more relevant trained machine learning (ML) model may be made available to the processor 106 of the uncrewed vehicle prior to, or during, deployment. The training data may be further processed, e.g. normalized, and labelled with predefined labels or categories for data points, as necessary in a conventional manner.

During training of the resolution enhancement ML model, the training images 302 are input to an engine/software module configured to apply the compression/resolution reduction technique 304 (which can be a rules-based/non-AI based technique, or an AI/deep learning-based technique) to generate a set of compressed training images 306. These compressed training images are then input to the resolution enhancement ML mode 308, such as used by Real-ESRGAN for example, which attempts to rebuild each image based on the internal weightings of the model.

Each of the images 310 output by the resolution enhancement ML model 308 may be compared to the corresponding original image from the training set 302. The weightings of the resolution enhancement ML model 308 can be adjusted based on the comparison, e.g. utilising a reward method. For instance, greater similarity to the original image/training data can result in a higher reward that is used to adjust, e.g. increase, the weights accordingly, whilst greater dissimilarity can result in a lower reward that is used to adjust, e.g. decrease, the weights accordingly. Over time and using a large data set of images (or other training data), the resolution enhancement ML model 308 will become able to interpret low resolution information and reconstruct so that it is very close to its original state.

In some embodiments the comparison may involve a discriminator/loss calculation 312. A reward calculation 314 may then be performed based on the results of the loss calculation 312, and the weightings of the resolution enhancement ML model 308 can be adjusted based on the calculated reward. Examples of equations used for the discriminator/loss calculation 312 include: a pixelwise comparison, Δ*_{N}= X*₂ *- X*₁ and an image variance calculation, *σ*² = ${\sum }_{i = 0}^{N - 1} {Δ}_{i}^{2}$, where *Xⱼ*= colour value for pixel X in image j; *α* = constant reward scaling factor, *α* ≥ 0, and *N* = total number of pixels in the images.

An example of an equation used for the training instance reward calculation 314 is: *R_{E} = -α · σ*². The calculated reward can be used to update the weights of the resolution enhancement ML model 308. In embodiments the original 302 and resolution-enhanced 310 images may have the same resolution/size/number of pixels, but if not then a resizing operation or the like can be applied to either or both images.

Some embodiments can involve training on time dependent information (such as video information) to allow for extrapolation of moving regions. This can then be carried through to image reconstruction allowing for prediction of motion based on previous images received. For example, embodiments may use information related to inter-frame similarity in a manner akin to that described above in relation to the data transfer of Figure 2. That is, changes between a reference frame and a current frame may be identified and data relating to the identifying changes may be compressed at step 304 and then used to reconstruct the current frame. The resolution enhancement of step 308 may be performed on the reconstructed frame. Thus, training data based on inter-frame similarity may be used to train the resolution enhancement ML model so that performance may be improved when the model is used in practice.

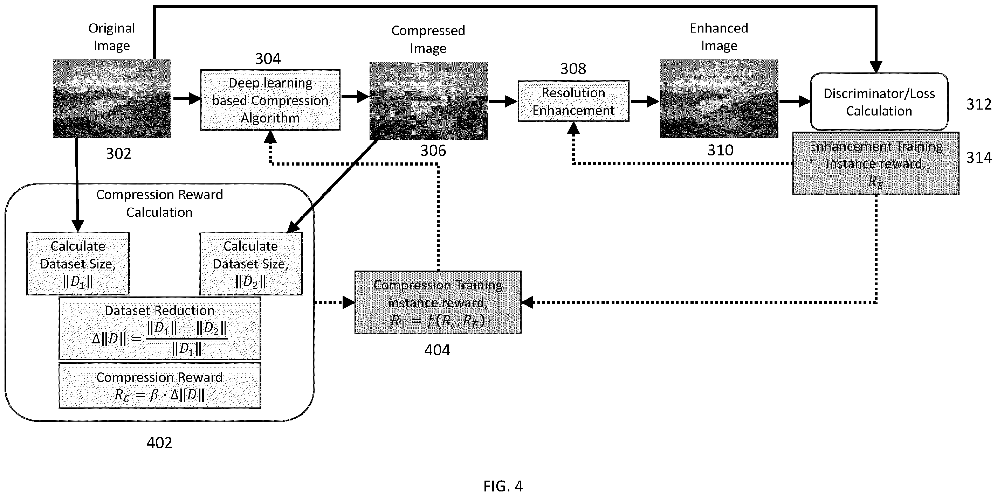

Figure 4 schematically illustrates an example of training the machine learning model used for compression/resolution reduction in addition to training the ML model 308 used for the resolution enhancement. The ML model used for compression/resolution reduction may comprise a deep learning model such as a CNN configured to output a version of the inputted data having reduced resolution and which therefore has a smaller data size. Embodiments can use an onboard model to deconstruct information in a way which is more easily interpretable for the trained ML model that will reconstruct/resolution-enhance it on the remote device 112. Training data similar to that described with respect to Figure 3 can be obtained and used for training the machine learning models. Again, for the purposes of illustration, operations involving training data in the form of images will be described, but it will be understood that any type of data that can be provided by a data source 104 of the uncrewed vehicle 102 (e.g. audio, inertial, etc) can be generated/obtained and used in other cases.

In the embodiment of Figure 4 an AI-based technique that uses a ML model is used for the data compression/resolution reduction. Suitable examples that are based on deep learning include: D. He, Z. Yang, W. Peng, R. Ma, H. Qin, and Y. Wang, "ELIC: Efficient learned image compression with unevenly grouped space-channel contextual adaptive coding," Proceedings of the IEEE/CVF Conference on Computer Vision and Pattern Recognition, pp. 5718-5727, Jun. 2022, and J. Liu, H. Sun, and J. Katto, "Learned image compression with mixed transformer-cnn architectures," Proceedings of the IEEE/CVF Conference on Computer Vision and Pattern Recognition, pp. 14 388-14 397, June 2023.

The training images 302 are input to the compression ML model 304 to generate a set of compressed training images 306. These compressed training images are then input to the ML model 308 used for the resolution enhancement, which attempts to rebuild each image based on its internal weightings. Each of the images output 310 by the resolution enhancement ML model 308 is then compared 312 to the corresponding original image from the training set 302. The weightings of the resolution enhancement ML model 308 can be adjusted based on the comparison utilising a reward method 314. This may involve a discriminator/loss calculation and a reward function similar to those of Figure 3.

Additionally in the embodiment of Figure 4, information related to each of the compressed training images 306 can be used to adjust weights of the compression ML model 304. In particular, a reward based on the data size of the compressed image output by the compression ML model 304 compared to the data size of the original image 302 can be used to adjust the weights, e.g. greater reduction in size compared to the original image/training data can result in a higher reward, whilst little/no reduction in size can result in no/a lower reward.

In some embodiments a data size reward calculation 402 is based on the data size D₂ of the compressed image 306 output by the compression ML model 304 being compared to the data size D₁ of the original image 302, and can be used to adjust the weights of the compression ML model 304. The dataset reduction calculation may involve an equation such as: $Δ \left‖D\right‖ = \frac{\left‖{D}_{1}\right‖ - \left‖{D}_{2}\right‖}{\left‖{D}_{1}\right‖}$

The reward function used to update the weights of the compression ML model 304 may be calculated as: ${R}_{C} = β ⋅ Δ \left‖D\right‖$ where *β* = constant reward scaling factor, *β* ≥ 0.

The result *R_{C}* of the data size reward calculation 402 may be input to a compression training instance reward calculation 404. In the reward calculation reduced data size of the compressed image/training data 306 compared to the data size of the original image/training data 302 can result in a higher reward that can be used to adjust, e.g. increase, the weights of the compression ML model 304, whilst no reduction in data size can result in a lower reward that can be used to adjust, e.g. decrease, the weights in an opposite manner.

The reward *R_{E}* of the calculation 314 based on the comparison between the original images from the training set 302 and the corresponding images 310 output by the resolution enhancement ML model 308 may also be input to the training instance reward calculation 404. Thus, the data compression ML model 304 may be trained to result in reduced data size, as well as similarity between the original image 302 and the enhanced image 310. Examples of equations that can be used to calculate the combined reward *R_{T}* = *f*(*R_{c}, R_{E}*) of the training instance reward calculation 404 may include: $f \left({R}_{c}, {R}_{E}\right) = {R}_{c} + {R}_{E}$ $f \left({R}_{c}, {R}_{E}\right) = \frac{{R}_{E}}{1 + {R}_{C}}$ $f \left({R}_{c}, {R}_{E}\right) = \frac{{R}_{C}}{1 - {R}_{E}}$

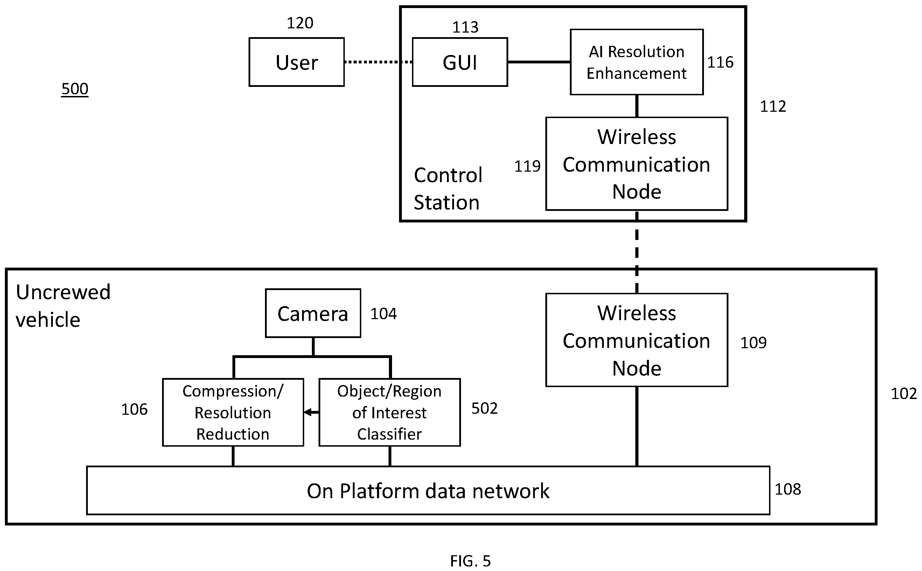

Figure 5 is a simplified block diagram of an alternative system 500. Components identical to those of Figure 1 have been given the same reference numerals. The uncrewed vehicle 102 of Figure 5 additionally includes a region of interest (Rol) algorithm 502. This may be a software module executed by the processor 106 or another processor of the vehicle, or it may comprise a processor, including an AI chip, dedicated to providing the Rol functionality. The Rol algorithm may use a ML model that has been trained using supervised learning to identify and classify regions of interest. The trained ML model may comprise a deep learning CNN trained to input an image and to output data relating to a region of interest (e.g. defined by boundary coordinates, object type classification, etc) detected in the image. Other examples of image-based Rol algorithms that can be used include a trained R-CNN, You Only Look Once (YOLO) and Single Shot mutlibox Detector (SSD). For audio data, any Automatic Speech Recognition technique, such as Hidden Markov Models, Natural Language Processing or a trained DNN, may be used. These can receive audio data as input and output data relating to a region of interest (e.g. a time period containing human speech, etc) detected in the audio data.

In use, the Rol algorithm 502 analyses the data obtained from the data source(s) 104 and outputs data identifying at least one Rol within it. In the case of image/video data the Rol algorithm may be trained to identify/detect the presence of specific types of objects or features. For example, where the Rol algorithm has been trained using image/video data produced by an air-based uncrewed vehicle then it may identify a person on the ground or another air-based vehicle in obtained image data, which represent objects typically encountered in that type of use scenario. Alternatively, if the Rol algorithm has been trained using image/video data produced by an undersea uncrewed vehicle then it may identify another undersea vehicle, etc, in obtained image data. In the case of data types other than video/images, a "region of interest" may be defined in a different manner, and may have an analogy in the time dimension. For example, the Rol algorithm may identify human speech in audio data, with the Rol being temporally defined as the time period in the audio data during which the speech was audible. Thus, the Rol algorithm may be trained to identify regions of interest in a context-specific manner.

A region of interest identified by the Rol algorithm 502 may be processed differently to other regions of the obtained data. For example, as the identified region of interest in obtained data is likely to contain an important feature, such as a recognised object or speech, it can be desirable to retain more information/resolution regarding that object for the user 120 of the remote device 112. Therefore, the region of interest in the obtained data may not be compressed prior to transmission via the node 109, or it may be compressed using a compression technique that results in higher quality/resolution (less information loss) than the compression technique normally applied by the processor 106, e.g. a lossless compression technique. For example, data identifying the Rol may be transferred to the compression algorithm with a flag indicating that it should be processed differently. Thus, part(s) of the obtained data other than the identified region(s) of interest can be compressed using the lossy technique prior to transmission to the remote device, whilst the identified region(s) of interest may be uncompressed, or compressed using a different, higher-quality technique, prior to transmission to the remote device.

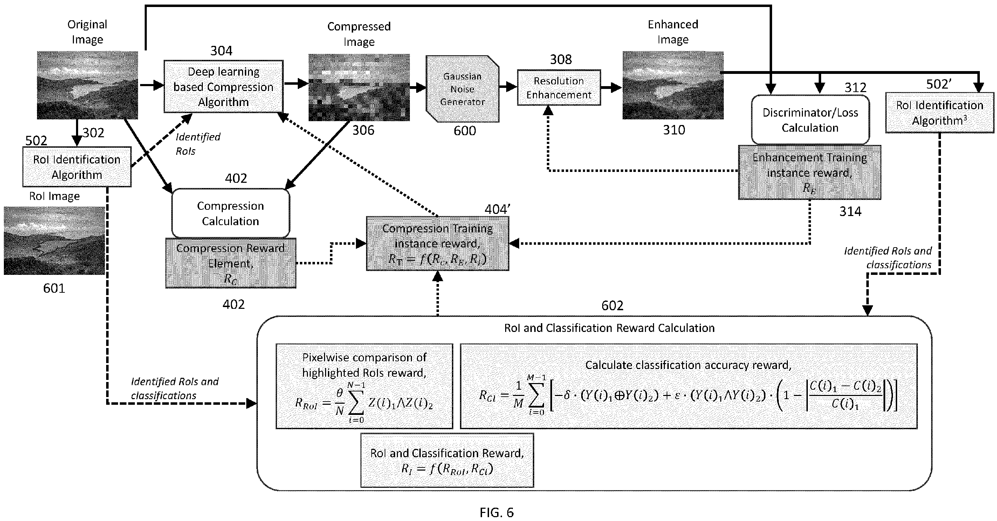

Figure 6 schematically illustrates an example of training the ML model 304 used for the compression/resolution reduction using data produced by the Rol algorithm 502. The training data may be similar to that described above with respect to Figures 3 or 4. The ML model for data compression can be trained using unsupervised learning after the ML model for the Rol identification/classification has been trained using supervised learning. Again, for the purposes of illustration, operations involving training data in the form of images will be described, but it will be understood that any type of data that can be provided by a data source 104 of the uncrewed vehicle 102 (e.g. audio, inertial, etc) can be generated/obtained and used in other cases.

In addition to the training operations described above with regards to Figure 4, in the embodiment of Figure 6 a Gaussian Noise generator 600 can optionally be used to add Gaussian Noise to the compressed data 306 before it is processed using the resolution enhancement ML model 308. It will be understood that this can also be done in other embodiments. Adding the Gaussian Noise can help the training process prevent overfitting and improve performance on unseen data, and may also make the model more fault-tolerant when processing data that may be degraded due to the environment where it is transmitted.

In addition to the training operations described above with regards to Figure 4, in the embodiment of Figure 6 the images from the training set 302 are also input to the Rol algorithm 502. The Rol algorithm may output data, such as image 601 that includes the identified Rol/object, where the Rol/object is in the data, as well as an indication, e.g. probability or confidence score, of into which class (of a plurality of recognised classes of Rols/objects) the Rol/object fits.

The data output by the Rol algorithm 502 is input to a Rol and classification reward method 602. In the embodiment of Figure 6, the enhanced images 310 output by the resolution enhancement ML model 308 are also input to Rol algorithm 502' and the results of the Rol algorithm 502' may also be input to the reward method 602. The reward method may be based on how accurate the classification labels output by the Rol algorithm are compared to human input (supervised learning). The reward method may, for example, award a higher reward value for accurately/correctly identifying a labelled Rol and accurately/correctly classifying it (e.g. based on labelled training data/ground truth), and award no/lower reward value for not/incorrectly identifying an object and/or misclassifying it. Although Rol algorithms 502, 502' are shown separately in the Figure, it will be understood that this may be for illustrative purposes and only one ML model may be used, or multiple models may be used temporarily before a main/final ML model is updated based on the weight adjustments of the multiple models.

The reward method 602 can calculate the reward value by comparing the area identified as containing the Rol/object, the classification label, and the confidence score in the obtained data, e.g. image, before and after it has been through the compression/resolution enhancement process. This reward value can preserve critical information in the data.

In some embodiments the reward method 602 may involve a pixelwise comparison of Rols (indicating accuracy of detection of a Rol in the original image, i₁ and the enhanced image, i₂): ${R}_{RoI} = \frac{θ}{N} {\sum }_{i = 0}^{N - 1} Z {\left(i\right)}_{1} ∧ Z {\left(i\right)}_{2}$

The reward method 602 may also calculate a classification accuracy reward, e.g.: ${R}_{Cl} = \frac{1}{M} {\sum }_{i = 0}^{M - 1} \left[-δ⋅\left(Y{\left(i\right)}_{1}⊗Y{\left(i\right)}_{2}\right)+ε⋅\left(Y{\left(i\right)}_{1}∧Y{\left(i\right)}_{2}\right)⋅\left(1-\left|\frac{C {\left(i\right)}_{1} - C {\left(i\right)}_{2}}{C {\left(i\right)}_{1}}\right|\right)\right]$ where:
*θ, δ, ε, µ=* constant reward scaling factor, *θ, δ, ε, µ* ≥ 0
*N* = total number of pixels in image
M = number of Rols identified in original image
*Y* = Classification label of the object
Z= Pixel label as in Rol or not
C = Confidence score in a given classification. 0 < *C* ≤ 1
*A*Λ*B*= AND function which will return value of 1 if state of a and b are the same, and
*A*⊕*B*= XOR function which will return the value of 1 if state of A and B and different

The reward value *R_{I}* output by the reward method 602 may be calculated by an equation such as: ${R}_{I} = f \left({R}_{RoI}, {R}_{Cl}\right)$

Examples of *f*(*R_{RoI}*, *R_{Cl}*) can include: $f \left({R}_{RoI}, {R}_{Cl}\right) = {R}_{RoI} + {R}_{Cl}$ $f \left({R}_{RoI}, {R}_{Cl}\right) = {R}_{RoI} ⋅ {R}_{Cl}$ $f \left({R}_{RoI}, {R}_{Cl}\right) = \left(μ+{R}_{RoI}\right) ⋅ {R}_{E}$

The reward value R_{I} calculated by the reward method 602, the reward value R_{C} calculated by the data size reward calculation 402 and the reward value R_{E} calculated by the resolution enhancement instance reward calculation 314, can be input to a modified compression training instance reward calculation 404', which calculates R_{T} = f(R_{c}, R_{E}, R_{I}). The results of this may be used to adjust weights of the compression ML model 304. Examples of equations that can be used to calculate *f*(*R_{c}, R_{E}, R_{I}*) include: $f \left({R}_{c}, {R}_{E}, {R}_{I}\right) = {R}_{c} + {R}_{E} + {R}_{I}$ $f \left({R}_{c}, {R}_{E}, {R}_{I}\right) = - \frac{{R}_{E}}{1 + {R}_{C}} ⋅ {R}_{I}$ $f \left({R}_{c}, {R}_{E}, {R}_{I}\right) = \frac{{R}_{C}}{1 - {R}_{E}} ⋅ {R}_{I}$

The compression ML model 304 may also be trained based on Rols identified in original uncompressed images 302, as well as in corresponding compressed-then-enhanced images 310. In this case the reward function for the compression ML model 304 can be calculated based on the output of the Rol model 502. The compression ML model reward function can calculate a reward value based on how closely the classification label and the region of interest match before and after the compression/decompression cycle (unsupervised learning based on how well the information is preserved).

Embodiments can allow data from the uncrewed vehicle 102 to be transferred at rates in the region of 100 - 400 KBps. This can allow, for example, images of at least 480 resolution to be transferred at low latency whilst providing information that can be of sufficient quality to be usefully interpreted by the user 120.

Embodiments of the system 100 can provide technical advantages including allowing for transmission of high density information via a lower bandwidth route from a sensor to a human user. Embodiments can achieve this by using "good enough" information enhanced by AI pre-trained to have a contextual understanding. The process of handling the data according to embodiments can naturally obfuscate it for transmission creating extra security. Further, reduced latency in signal transmission due to the reduced amount of information being sent can be further improved using analogue compute. Image interpolation may enable further data bandwidth or latency benefits.

It will be understood that embodiments can be implemented using any suitable software, programming language, data editors, etc, and may be represented/stored/processed using any suitable data structures. It will also be understood that the steps described herein as part of the detailed embodiments may be re-ordered, omitted and/or repeated. Additional steps may also be performed. Some steps may be performed concurrently instead of sequentially.

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A computer-implemented method of transferring data from an uncrewed vehicle, the method comprising:
obtaining (202), at the uncrewed vehicle, data to be transferred;
compressing (204), at the uncrewed vehicle, the obtained data using a lossy data compression technique to produce compressed data;
transferring (206) the compressed data from the uncrewed vehicle over a wireless communications link to a remote device, and
performing (208), at the remote device, resolution enhancement on the transferred compressed data using a trained machine learning model to produce enhanced data.

2. A method according to claim 1, further comprising:
applying a lossless compression technique (205) to the compressed data prior to the transferring (206) from the uncrewed vehicle, and
applying, at the remote device, a lossless decompression technique (207) to the transferred compressed data prior to the performing (208) of the resolution enhancement.

3. A method according to any preceding claim, wherein the obtained data comprises a video and the method further comprises steps of:
selecting, at the uncrewed vehicle, a frame of the video as a reference frame, and compressing and transferring the reference frame to the remote device over the wireless communication link;
selecting, at the uncrewed vehicle, a frame of the video as a current frame, and identifying changes between the current frame and the reference frame;
compressing, at the uncrewed vehicle, data representing the identified changes;
transferring the compressed data representing the identified changes from the uncrewed vehicle over the wireless communication link to the remote device;
reconstructing, at the remote device, the current frame using the transferred data representing the identified changes and the reference frame to produce a reconstructed frame, and
performing, at the remote device, the resolution enhancement on the reconstructed frame using the trained machine learning model.

4. A method according to any preceding claim, wherein the uncrewed vehicle comprises a land, air, underwater and/or water surface type of uncrewed vehicle, and the machine learning model for the resolution enhancement is trained using training data generated using, or based on, a vehicle of a same type as the uncrewed vehicle.

5. A method according to any preceding claim, wherein the trained machine learning model for the resolution enhancement is trained using a reward function based on similarity between training data and enhanced training data comprising the training data compressed using the lossy data compression technique and then resolution enhanced using the machine learning model for resolution enhancement.

6. A method according to claim 5, wherein the training data comprises a video, and wherein data representing identified changes between a reference frame and a current frame of the video is compressed; the current frame is reconstructed using the compressed data representing the identified changes, and the resolution enhancement is performed on the reconstructed frame to produce the enhanced training data.

7. A method according to claim 5 or 6, wherein the lossy data compression technique comprises a resolution reduction technique that uses a trained machine learning model for data compression, wherein the trained machine learning model for data compression is trained using a reward function based on a data size of compressed training data and a data size of uncompressed training data, and wherein the reward function additionally uses a reward value calculated by the reward function used for training the machine learning model for the resolution enhancement.

8. A method according to claim 7, further comprising:
identifying/classifying (502) at least one region of interest in the obtained data;
processing the at least one region of interest by the trained machine learning model for data compression differently to the obtained data outside the region of interest; not compressing the at least one region of interest using the lossy compression technique, or compressing the at least one region of interest using a different compression technique to the lossy data compression technique used for the obtained data outside the region of interest, and
transferring data relating to the at least one region of interest over the wireless communications link to the remote device.

9. A method according to claim 8, wherein the at least one region of interest is identified/classified using a trained machine learning model, wherein the trained machine learning model for identifying/classifying the region of interest is trained using a reward function based on accuracy of identifying a region of interest and/or accuracy of classification of the region of interest.

10. A method according to claim 9, wherein the machine learning model for data compression is trained based on at least one region of interest identified in training data by the trained machine learning model for identifying/classifying the region of interest, and at least one region of interest identified in enhanced training data comprising the training data compressed using the lossy data compression technique and then resolution enhanced using the machine learning model for resolution enhancement.

11. A method according to any preceding claim, wherein Gaussian Noise is added to the compressed training data before performing (208) the resolution enhancement using the machine learning model for resolution enhancement.

12. A method according to any preceding claim, wherein the compressing (204) the obtained data and/or the performing the resolution enhancement (208) is executed using an analogue processor or a Graphics Processing Unit.

13. A method according to any preceding claim, wherein the compressing (204) the obtained data is performed using a dedicated processor located in proximity to, or co-located with, a source of the obtained data.

14. A computer readable medium, or circuit, storing a computer program to operate a method according to any preceding claim.

15. A system comprising an uncrewed vehicle (102) and a remote device (112),
the uncrewed vehicle comprising a data source (104), at least one processor (106) and a wireless communication link (109), wherein the at least one processor is configured to:
obtain, from the data source, data to be transferred;
compress the obtained data using a lossy data compression technique to produce compressed data, and
transfer the compressed data over the wireless communications link to the remote device,
the remote device comprising at least one processor (116) and a wireless communication link (119), wherein the at least one processor is configured to:
received the transferred compressed data via the wireless communication link, and
perform resolution enhancement on the transferred compressed data using a trained machine learning model to produce enhanced data.
